# EUROPEAN PATENT APPLICATION

(11) **EP 4 527 748 A1**
(43) Date of publication of application: **26.03.2025**
(21) Application number: 22941885.0
(22) Date of filing: 20.05.2022
(51) Int. Cl.: B64G 7/00, B64G 1/60, B64G 99/00, G09B 9/00, G09B 9/08, G09B 9/10, A63B 26/00

(54) **HYPERGRAVITY SYSTEM**

(71) Applicant: Sant'ana, Tulio Cazarini, 04130-080 São Paulo (BR)
(72) Inventor: Sant'ana, Tulio Cazarini, 04130-080 São Paulo (BR)
(74) Representative: Berggren Oy
(86) International application number: PCT/BR2022/050169
(87) International publication number: WO 2023/220790

(57) **Abstract**

Hypergravity system comprising a mechanical shaft connected to at least one central motor configured to cause rotational movement to the mechanical shaft, at least one connecting arm connected to the mechanical shaft, at least one housing chamber, and wherein each housing chamber is connected to a connecting arm by means of a hinged connection, wherein the hinged connection is configured so that, during rotation of the mechanical shaft, the housing chambers move radially outwards wherein the connecting arm comprises at least one object passage configured to enable the entry and/or exit of objects into the housing chamber by the connecting arm.

## Description

### TECHNICAL FIELD

The present invention relates to a system capable of simulating hypergravity conditions in a controlled environment through the rotation of housing chambers. More specifically, the present invention relates to a hypergravity system comprising pendulum housing chambers connected to a mechanical axis and aims to simulate hypergravity conditions that can last for up to months without interruption.

### FUNDAMENTALS OF THE INVENTION

Equipment that includes personnel chambers where it is possible to simulate hypergravity conditions is already known in the state of the art, being used in the aerospace industry, for example, to adapt astronauts to environmental changes during moments of very high accelerations, such as rocket launches.

In some existing solutions, the effects of hypergravity have been tested in the sports industry to prepare athletes. Training in an environment with higher gravity than Earth's can help the human body reach new limits and improve performance in competitions.

Thus, some state-of-the-art solutions aim to provide better conditions for sports preparation or adaptation in gravity environments by generating centripetal acceleration. Russian patent application RU96780U1 discloses a technology aimed at sports training or increasing athletic performance by increasing the gravity applied to an environment, which will be located within the rotation of a cylindrical shaft, with the action of a force that simulates gravity in said environment.

Japanese patent application JP2019187782A discloses a hypergravity device that enables training by systematically and stably changing gravity in an environment. The hypergravity environment application training device is provided on a rotating plate, which rotates around a rotating axis and comprises an angle adjustment device and a plurality of hypergravity chambers in which a subject performs his/her training.

The non-patent document *"*ELECTRODYNAMIC GRAVITY GENERATOR FOR ARTIFICIAL GRAVITY MODULES " by Predrag Jectovic reveals the possibility of generating artificial gravity, given the numerous harmful effects on human health that the lack of gravity can cause in space. In this way, the article suggests that the generated centripetal acceleration can replace gravity. The objective is to obtain controlled rotation to achieve at least partial levels of artificial gravity in order to allow for more complex space exploration with human presence.

Based on the analysis of the state of the art, it is clear that creating and maintaining hypergravity conditions for a long period of time is still a process that presents technical challenges. This is because existing controlled environments provide great restrictions to the human body, such as, but not limited to, movement restrictions and deprivation of sunlight. In addition, the user within the hypergravity environment will eventually need to eat, hydrate and take care of physiological needs. Such limitations make it difficult to conduct studies for longer periods of time.

Thus, existing state-of-the-art solutions fail to reveal a hypergravity system that allows tests or exercises with increased gravity to be carried out on human beings for long periods of time.

Furthermore, the state of the art fails to reveal a hypergravity system that allows objects to enter and exit during their rotation movement with the purpose of improving the user's quality of life and offering conditions for human survival for long periods of time.

### OBJECTIVES OF THE INVENTION

One of the objectives of the present invention is to disclose a hypergravity system that allows tests or exercises to be carried out with increased gravity in human beings for long periods of time.

One of the objectives of the present invention is to introduce a hypergravity system that allows the entry and exit of objects during their rotation movement with the purpose of offering conditions for human survival for long periods of time.

### SUMMARY OF THE INVENTION

The present invention relates to a hypergravity system comprising a mechanical shaft connected to at least one central motor configured to cause rotational movement to the mechanical shaft, at least one connecting arm connected to the mechanical shaft, at least one housing chamber, and in which each housing chamber is connected to a connecting arm by means of an articulated connection. The articulated connection is configured so that, during rotation of the mechanical shaft, the housing chambers move radially outwards, in which the connecting arm comprises at least one object passage configured to allow the delivery and/or retrieval of objects into the housing chamber by the connecting arm.

Furthermore, the housing chamber has at least one outlet, one for general objects, expelled through mobile compartments, and one outlet for waste, led by the connecting pivot between the housing chamber and the connecting arm and then to the sewage box by means of pipes. In the configuration of the invention where both outlets are present, they are independent.

### BRIEF DESCRIPTION OF THE DRAWINGS

A more complete understanding of the described invention may be obtained by reference to the detailed description when considered in conjunction with the following illustrative Figures.
Figure 1 is a perspective view of the hypergravity system according to an embodiment of the present invention;
Figure 2A shows a longitudinal sectional view of the housing chamber coupled to the connecting arm, where it is possible to observe the various object passages accommodated inside the connecting arm, and how these are located inside the chamber according to an embodiment of the present invention;
Figure 2B shows the front view of the connecting arm that connects the mechanical shaft to the articulated connection of the housing chamber according to a configuration of the present invention;
Figure 3A illustrates a cross-section of the connecting arm linking the mechanical shaft to the housing chamber to exemplify a possible embodiment, in which all passages among at least one object passage are arranged within the connecting arm according to an embodiment of the present invention;
Figure 3B illustrates an alternative embodiment in which some passages among the at least one object passage may be externally attached to the connecting arm;
Figure 4 reveals structures of the hypergravity system, such as a multiple maintenance and refueling station, an access walkway to the mechanical shaft, support structures, the connecting arm, roof, sunlight capture and an external collection space according to a form of the present invention;
Figure 5 is a top view of the hypergravity system and illustrates the distance between the mechanical axis and the housing chamber, the dimensions of the housing chamber and the distance between the housing chambers for resting condition in accordance with a configuration of the present invention;
Figure 6 illustrates a model of the present invention in which a movable walkway connects two adjacent housing chambers;
Figure 7 is a top sectional view showing the 24 housing chambers at rest arranged radially around the mechanical axis (deleted) in accordance with a possible configuration of the present invention;
Figure 8 illustrates an extreme situation where the accommodation chambers are rotated by 90° in relation to their resting position, to display the adaptation of the mobile walkway to the condition of greater distance between adjacent accommodation chambers according to an embodiment of the present invention;
Figure 9 illustrates an embodiment of the present invention in which the connecting arms and a radial peripheral circular structure are constituted by a lattice structure.

### DETAILED DESCRIPTION

The present invention relates to a hypergravity system comprising a mechanical shaft connected to at least one central motor configured to cause rotational movement to the mechanical shaft, at least one connecting arm connected to the mechanical shaft, at least one housing chamber, wherein each housing chamber is connected to a connecting arm by means of an articulated connection. The articulated connection is configured so that, during rotation of the mechanical shaft, the housing chambers move radially outwards. The connecting arm comprises at least one object passage configured to enable the entry and/or exit of objects into the housing chamber by the connecting arm.

The detailed description of example formats herein refers to the accompanying drawings showing exemplary embodiments. While these exemplary embodiments are described in sufficient detail to enable those skilled in the art to execute the designs, it should be understood that other embodiments may be realized and that logical changes and adaptations in design and construction may be made in accordance with this disclosure and the teachings herein. Accordingly, the detailed description herein is presented for purposes of illustration only and not of limitation.

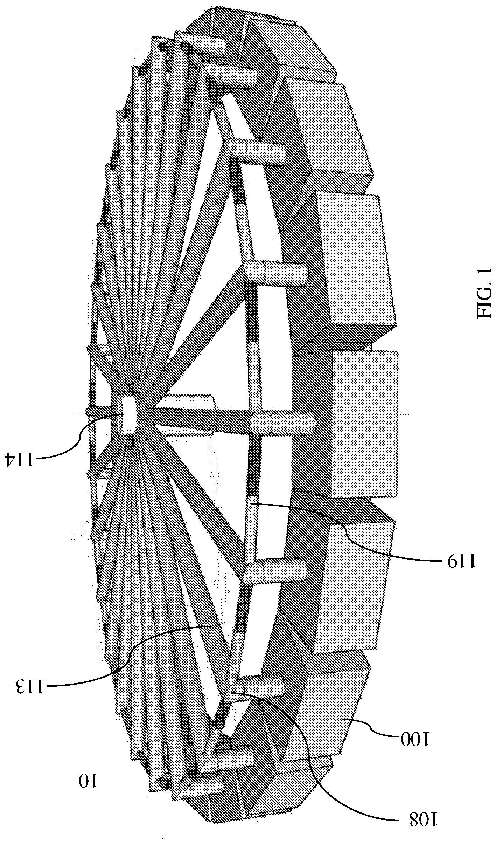

Figure 1 shows a hypergravity system (10) for creating hypergravity conditions through centripetal acceleration in radially arranged housing chambers (100). The use of such equipment provides a less aggressive environment for the human occupant and therefore enables human testing to be maintained under such conditions for longer periods of time. The external structure of the hypergravity system (10) and housing chambers (100) may be constructed of materials such as, but not limited to, metal alloys, steel, and titanium.

In an optional embodiment, the housing chambers have a rectangular area 4 meters wide by 6 meters long, totaling 24 m² of internal space for movement or arrangement of objects.

Still in Figure 1, the arrangement of the mechanical shaft (114)¹¹⁴ is revealed, as well as the connecting arms¹¹³ that connect the mechanical shaft¹¹⁴ to the housing chamber through an articulated connection¹⁰⁸.

In an optional embodiment, the system further comprises a radial peripheral circular structure¹¹⁹ concentric to the mechanical shaft¹¹⁴, which connects the connecting arms¹¹³ to each other close to their articulated connections¹⁰⁸. The radial peripheral circular structure¹¹⁹ provides greater integrity to the equipment by preventing the occurrence of undesirable effects such as warping resulting from bending moments in the arms connecting the mechanical shaft¹¹⁴ to the housing chambers¹⁰⁰.

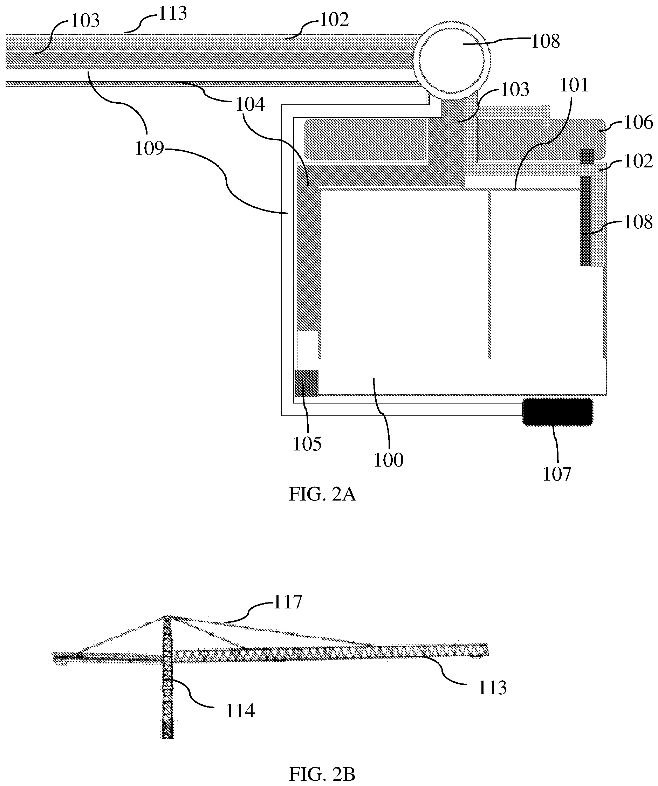

Figure 2A shows a longitudinal sectional view of the housing chamber 100 coupled to the connecting arm 113, where it is possible to observe the various object passages accommodated inside the connecting arm, and how these are located inside the chamber. In the various embodiments below, the possible object passages present in the connecting arm 113 will be described, responsible for transporting objects to the inside of the housing chamber 100 and providing the necessary conditions for the user or athlete to remain in the housing chamber for long periods of time.

In an optional embodiment illustrated in Figure 2A, passageway is formed by at least one duct with an accordion intersection at the articulated connection 108. The accordion intersection being one or more of, but not limited to, one or more siphons and one or more flexible ducts. Furthermore, the accordion intersection may further contain reinforcing structures.

In an optional embodiment illustrated in Figure 2A, the at least one passageway comprises at least one cable 101, at least one of one or more power cables and one or more telecommunications cables. The one or more power cables are used to supply electrical power to the housing chamber 100 and the one or more telecommunications cables are used to carry television and Internet signals to the housing chamber 100.

In an optional embodiment illustrated in Figure 2A, the housing chamber 100 comprises at least one water reservoir 106 and the at least one passage further comprises a treated water inlet 102 for supplying treated water to the housing chamber 100 and the at least one water reservoir 106. The treated water inlet 102 allows to take water directly to showers, toilets and taps and the water reservoir 106 allows to keep the housing chamber 100 supplied with treated water in case of failure in the water supply or in the treated water inlet 102. In this way, the water reservoir 106 is also connected to toilets, showers and taps.

In an optional embodiment illustrated in Figure 2A, the at least one passageway further comprises at least one optical fiber 103 connected to a solar panel (not shown). The solar panel is arranged externally to capture sunlight and the at least one optical fiber 103 is arranged to transmit the sunlight captured by the solar panel to the interior of the housing chamber 100. In this way, it would be possible to provide exposure to sunlight inside the housing chamber 100, which avoids possible health problems caused by the absence of sunlight for long periods of time.

In another optional embodiment illustrated in Figure 2A, the at least one passage additionally comprises an object inlet 104 formed by a concertina intersection at the articulated connection 108. The objects are inserted into the housing chamber within a sphere that can be made of at least one of, for example, but not limited to, a polymer, a metal alloy, steel, and aluminum. The sphere is formed by two half-spheres that house within it the object to be inserted into the housing chamber 100 and the half-spheres are connected by at least one connection mechanism of, but not limited to, a threaded fitting, a clamp and a metal latch. The sphere rolls through the at least one passage between the mechanical shaft 114 to the housing chamber 100 by means of the connection arm 113 and the articulated connection 108. In this way, it is possible to keep the hypergravity system operating for a long period of time without the need for interruptions to supply the housing chamber.

In an optional embodiment illustrated in Figure 2A, the housing chamber 100 comprises a sewage outlet 109 and the at least one passage further comprises sewage outlet 109. Sewage is pumped out of the housing chamber 100 from a pump arranged in a sewage box 107 and through the sewage outlet 109 which passes through the articulated connection 108 and the connecting arm 113 until reaching the mechanical shaft 114. Thus, the sewage outlet 109 allows the sewage box to be emptied throughout the rotation period, which allows it to last longer.

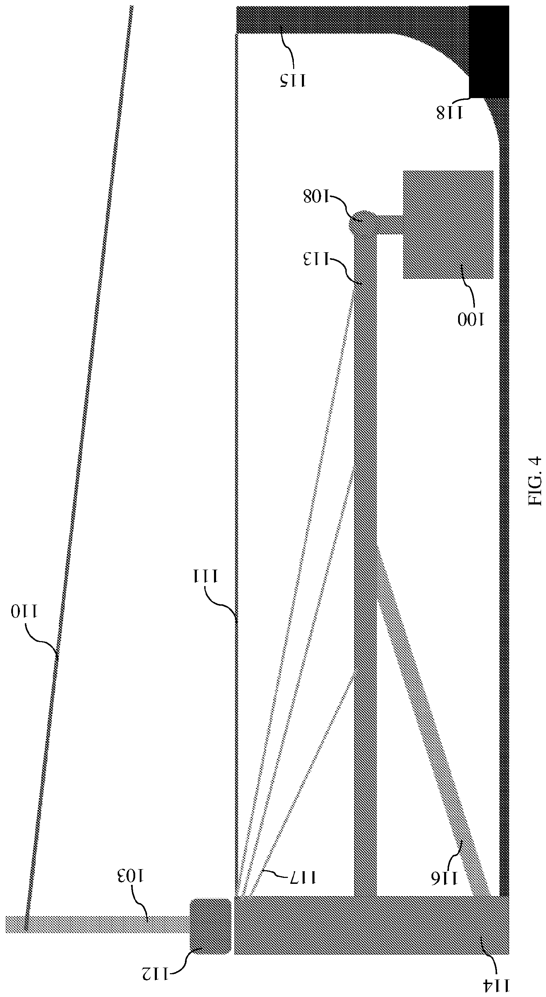

In an optional embodiment illustrated in Figure 2A, the housing chamber 100 comprises an object outlet 105 configured to receive and permit passage of a sphere out of the housing chamber. Objects are removed from the housing chamber 100 into the sphere from the object outlet 105, the sphere rolling through an external containment wall 115 until reaching an external collection space 118. In this manner, the object outlet 105 permits the purging of materials from within the housing chamber 100 without interrupting the rotational motion of the hypergravity system. The external containment wall 115 and the external collection space 118 are shown in Figure 4.

Again referring to Figure 2A, the articulated connection 108 that allows the pendulum movement of the housing chamber 100 at different centripetal accelerations. The rotation speed of the housing chambers 100 and the turning radius of the chambers (extension of the connecting arm 113) directly impact the gravity felt in the housing chambers 100. The higher the speed and the radius, the greater the gravity felt inside the housing chambers 100.

Figure 2A also reveals the arrangement of the compartments and components that make up the housing chamber 100, namely: the drinking water reservoir 106 in the upper part of the chamber for storing water in the event of a failure in distribution, object inlet 104 on the internal surface of the housing chamber 100, treated water inlet 102 into the housing chamber 100 and into the supply of the reservoir 106, sunlight inlet 103 through at least one optical fiber, object outlet 105 in the lower left corner.

Furthermore, the use of the object inlet 104, the object outlet 105 and the sewer outlet 109 does not interfere with the rotational movement of the hypergravity system 10.

Figure 2B is a front view of the connecting arm 113 connecting the mechanical shaft 114 to the housing chamber 100. In one embodiment of the present invention the connecting arm 113 and the radial peripheral circular structure 119 may be constituted by a lattice structure. In an alternative embodiment, the connecting arm 113 and the radial peripheral circular structure 119 may be constructed by a tubular structure.

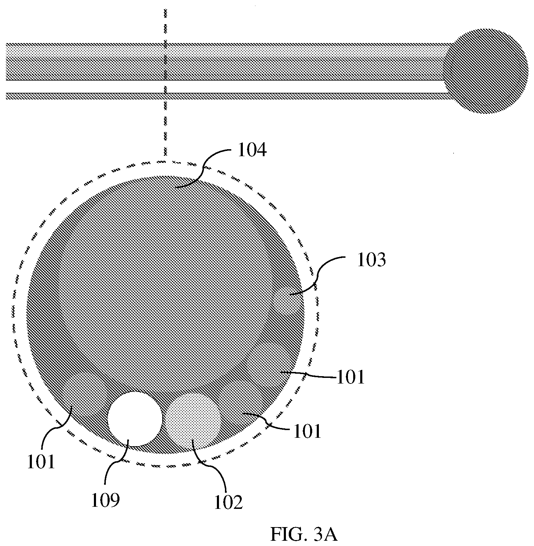

Figure 3A represents a cross-section of the connecting arm 113 of the present invention in an embodiment in which the arm 113 has a tubular structure. Thus, it is possible to observe the arrangements of the at least one passage, specifically, the object inlet 104 consists of a wide metal tube with a diameter of 400 mm, used for sending materials of the most diverse types such as, but not limited to, drinking water, clothing and food. In addition, the passages for at least one optical fiber 103, at least one cable 101, the treated water inlet 102 and the sewage outlet 109 are also shown.

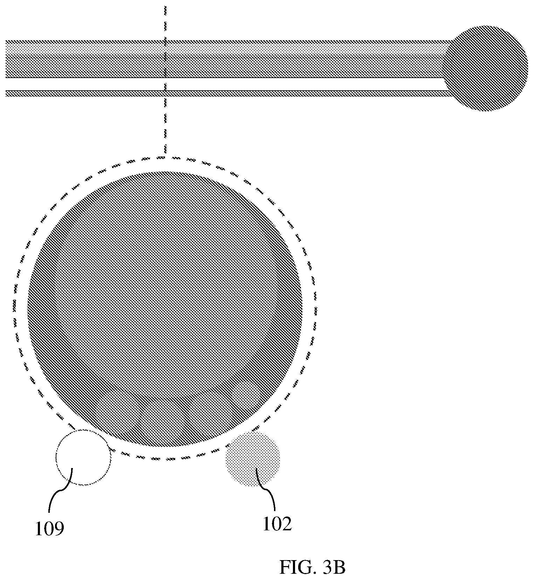

Figure 3B represents an alternative embodiment of the present invention in which exemplarily, but not limited to, the passage for the sewage outlet 109 and the passage for the treated water inlet 102, are externally fixed to the connecting arm 113.

With respect to Figures 3A and 3B, there is no requirement that all configurations of the invention have all possible amenities, i.e., the number of object passages may be limited depending on the application and technical feasibility of the project. Furthermore, additional passages and ducts may be incorporated without prejudice to the concept of the present invention.

Figure 4 shows an embodiment of the present invention wherein the hypergravity system comprises an external containment wall 115, which is a civil construction structure that radially surrounds the axis 114 and the at least one housing chamber 100, for access by people and for collecting the purge spheres. It can be seen in Figure 4 the at least one external collection space 118 contained in the external containment wall 115, wherein the at least one collection space 118 is configured to receive a sphere purged by the housing chamber. Preferably, each of the at least one external collection space 118 is spaced apart at an angle of 90 degrees.

Still according to the configuration of the present invention illustrated in Figure 4, the connecting arm 113 can be reinforced by at least one support structure to support the connecting arms 113. Preferably, the at least one support structure comprises at least one of, but not limited to, steel cables 117 (ties) and a brace 116. Specifically, the steel cables 117 can be used for support at the top of the connecting arms 113 and the brace 116 at the bottom of the connecting arms 113.

Figure 4 also reveals a maintenance and multi-supply station 112 arranged above the mechanical shaft 114 and connected to at least one passage, where all the entry and exit points for the housing chambers 100 are concentrated, such as light, water, energy and object entry. The insertion of objects can be done manually or electronically. Access to the multiple maintenance and supply station 112 is done through at least one access walkway 111 to the mechanical shaft 114 connecting the external containment wall 115 to the mechanical shaft 114. The mechanical shaft 114 additionally comprises at least one central motor (not shown) configured to cause rotational movement to the mechanical shaft 114. The design and dimensioning of the central motor will depend on the weight and size of the structure, and the one or more motors can be selected from an internal combustion engine and an electric motor.

Still according to the embodiment of Figure 4, the hypergravity system 10 is covered by a conical-shaped roof 110. Above the roof are arranged solar panels (not shown) to capture light. The solar panels are connected to at least one fiber optic cable 103 and enter the hypergravity system 10 through the mechanical shaft 114 and, from there, follow the connection arm 113 to the housing chamber 100, as illustrated in Figure 3. In this way, it is possible to provide natural lighting to the interior of the chamber, which provides advantages with regard to the physical health of the user confined in the housing chamber 100 and savings in electrical energy.

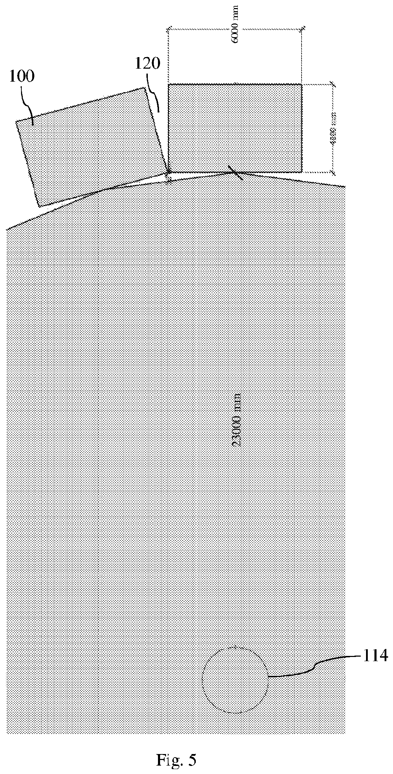

In Figure 5, a top view of part of the hypergravity system 10 is shown, where the radius of rotation of the hypergravity system 10 is 23 m. This is also the same measurement as the length of the connecting arm 113. The closest points between adjacent housing chambers are 56 mm apart in the resting state. Considering the size of the connecting arms 113 of 23 m, the inner diameter of the hypergravity system is 46 m. For example, to achieve a speed of 2 G, the mechanical shaft 114 of the hypergravity system 10 must rotate at a speed of approximately 100 km/h (70 °/s or 11.67 RPM) at the end of the housing chamber 100.

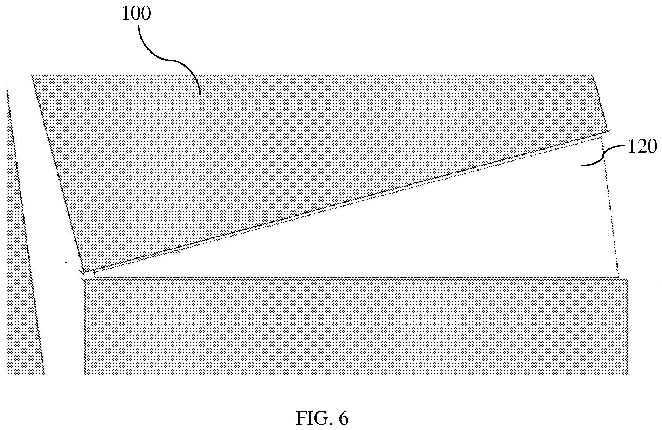

Figure 6 illustrates an embodiment of the present invention in which a movable walkway 120 connects two adjacent housing chambers. In this embodiment, the hypergravity system 10 comprises one or more walkways 120 connecting the housing chambers 100. Preferably, the one or more movable walkways 120 comprise a sliding floor, a sliding cover and accordion (or hinged) walls. The accordion walls have the function of providing greater safety to the walkway 120 when the system 10 is rotating at high speeds and the sliding cover functions in the same way as the sliding floor of the movable walkway.

Figure 6 shows a representation of the sliding floor of one of these walkways 120 without any sliding, that is, with the hypergravity system 10 at rest. With the movement of the mechanical shaft 114, the one or more walkways 120 are configured to modify their length with the separation of the rotating housing chambers 100. The articulation of the mobile walkway 120 can be done mechanically, in which it is regulated by the rotation movement itself, or done electronically with the use of an electronic control and hydraulic pistons. As an example, the mobile walkways can have a shape similar to the accordion connections between train or bus cars with a large length.

The modules of the accommodation chambers 100 can be composed according to the need and complexity of each purpose, and the chambers 100 can be interconnected by the mobile walkways 120 or not. Internally, the accommodation chambers 100 can include any items and amenities that make up a house, as per the configurations illustrated in Figure 2A.

Thus, when present, the one or more walkways 120 allow the accommodation chambers 100 to share internal space with each other in order to provide space for at least one collective space among, but not limited to, a cinema, games room, community center, dormitory, cafeteria, pantry, service dormitory, collective bathroom, swimming pool, running track, library, office, service area, kitchen, multimedia room and gym.

In another optional embodiment, each of the accommodation chambers 100 is constructed as a detachable module, which allows, if necessary, the removal of side walls in order to connect the accommodation chambers 100 with the walkways 120. Thus, the accommodation chambers 100 can be composed according to the need and complexity of each purpose.

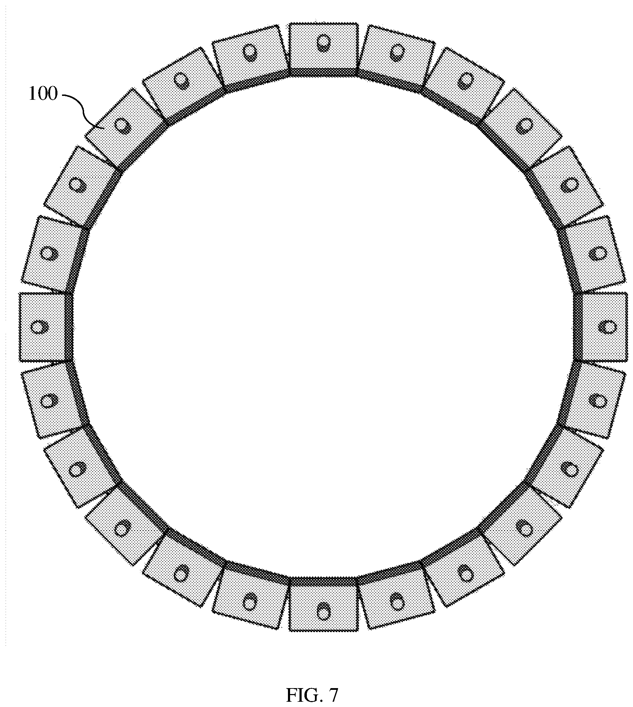

Figure 7 corresponds to the top sectional view that represents the arrangement of the 24 accommodation chambers 100 at rest, according to a preferred embodiment of the present invention.

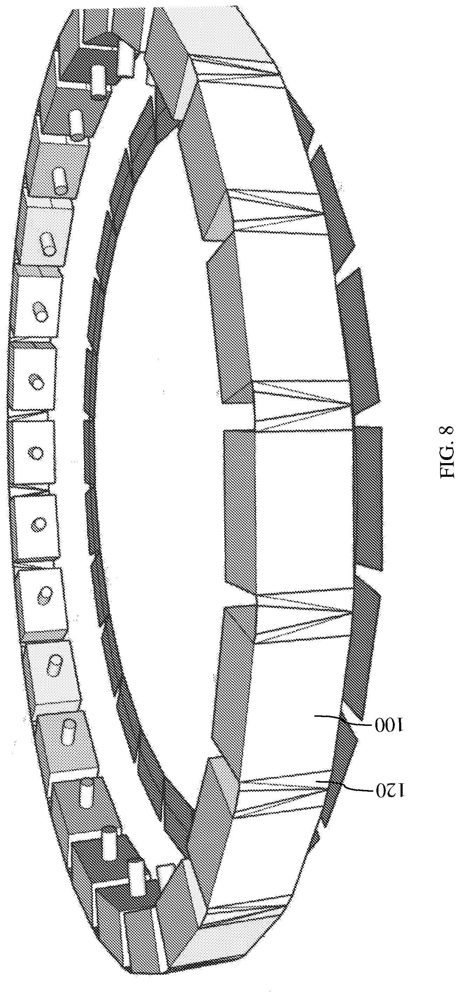

In Figure 8, alternative and hidden segments are revealed in the other views of the walkway 120 between the accommodation chambers 100. In this representation, the accordion walls and the sliding cover of the walkways 120 have been hidden for better visualization. The structures of the walkways 120 come out from under the floor and slide as the rotation increases and, consequently, increases the space between the chambers, so as to continue to provide a safe condition of access from one chamber to another. The walkways 120 between the accommodation chambers 100 will increase by a maximum of 35 centimeters on each side. This type of walkway with a sliding structure is similar, for example, to the passages used in metropolitan trains to connect wagons or in articulated buses.

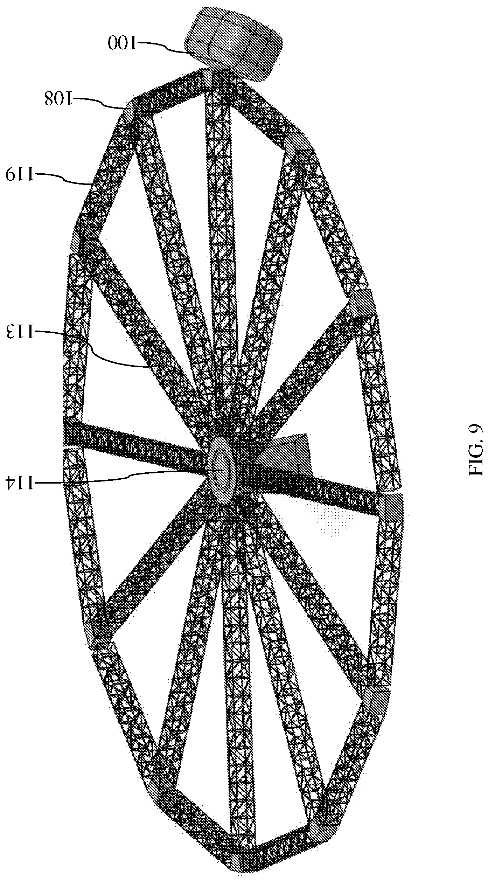

In Figure 9, an embodiment of the present invention is illustrated in which the connecting arms 113 and the radial peripheral circular structure 119 are constituted by a space-frame structure. In addition, it is possible to observe the inclination of the housing chamber 100 in rotation at maximum speed, the inclination caused by the rotation of the mechanical shaft 114 representing the displacement of the housing chambers 100 radially outwards allowed by the articulated connection 108. The sensation for those inside the housing chamber 100 changes almost imperceptibly, since the resultant of the centrifugal and normal forces is perpendicular to the floor of the chamber.

Furthermore, the presence of sufficient internal space in the accommodation chambers for free movement and a sufficiently large rotation radius (23 m) reduce the risk of a person suffering from sopite syndrome, which can affect a person subject to gravitational changes due to uniform pendular movement with short rotation axes, due to the difference in hypergravity measured at the head and feet, as a function of the difference in distance to the axis.

The hypergravity system 10, which is the object of the present invention, is intended to enable confinements lasting 1 month or more and operates with a weekly scheduled maintenance plan with the aid of entry and exit of objects and with the presence of water and sewage reservoirs that allow uninterrupted operation for 7 days, in the event of problems with the entry and exit of objects and the water supply.

Thus, the present invention provides a hypergravity system in which a person can walk freely within this environment and continue their daily routine and training. Although the focus of the implementations has been given to the sports area, the present invention can be used in the most diverse fields, such as physiotherapy, medicine, aerospace, military, entertainment, and others.

The present invention is advantageous because it solves the problem of the entry and exit of objects, with a collector and purge so that the machine can be kept running uninterruptedly for an indefinite period of time. In this way, it is possible to plan, for example, a weekly scheduled maintenance plan to assist the entry and exit of objects - we install a water and sewage tank and, in this way, the system can remain running uninterruptedly for 7 days, even if there are problems with the entry and exit of objects.

Numerous variations affecting the scope of protection of this application are permitted. This reinforces the fact that the present invention is not limited to the particular configurations/embodiments described above.

## Claims

1. Hypergravity system (10), **characterized by** the fact that it comprises:
a mechanical shaft (114) connected to at least one central motor configured to cause rotational movement to the mechanical shaft (114);
at least one connecting arm (113) connected to the mechanical shaft (114); and
at least one housing chamber (100), wherein each housing chamber (100) is connected to a connecting arm (113) by means of a hinged connection (108);
wherein the articulated connection (108) is configured so that, during rotation of the mechanical shaft (114), the housing chambers (100) move radially outwards;
wherein the connecting arm (113) comprises at least one object passage configured to enable the entry and/or exit of objects into the housing chamber (100) by the connecting arm (113).

2. Hypergravity system (10), according to claim **1, characterized by** the fact that it additionally comprises at least one passage externally fixed to the connection arm (113).

3. Hypergravity system (10) according to claim 1 or 2, **characterized in that**:
the at least one passage is formed by at least one duct with a bellows intersection at the articulated connection (108);
wherein the accordion intersection is one or more of one or more siphons and one or more flexible ducts.

4. Hypergravity system (10) according to any one of claims 1 to 3, **characterized in that** the at least one passage comprises at least one optical fiber bundle (103) connected to a solar panel, the solar panel arranged externally to capture sunlight and the at least one optical fiber bundle (103) arranged to transmit the sunlight captured by the solar panel to the housing chamber (100).

5. Hypergravity system (10) according to any one of claims 1 to 4, **characterized in that** the at least one passage additionally comprises:
at least one cable (101) being at least one of one or more electricity cables and one or more telecommunications cables;
the one or more power cables used to supply electrical energy to the housing chamber (100); and
the one or more telecommunications cables used to carry television and Internet signals to the accommodation chamber (100).

6. Hypergravity system (10) according to any one of claims 1 to 5, **characterized in that** the housing chamber (100) comprises at least one water reservoir (106), and in which the at least one passage comprises a treated water inlet (102) for supplying treated water to the housing chamber (100) and the at least one water reservoir (106).

7. Hypergravity system (10) according to any one of claims 1 to 6, **characterized in that**:
the accommodation chamber (100) comprises a sewage outlet (109); and
the at least one passage additionally comprises the sewage outlet (109),
wherein sewage is pumped out of the housing chamber (100) from a pump arranged in a sewage box (107) and through the sewage outlet (109).

8. Hypergravity system (10) according to any one of claims 1 to 7, **characterized in that** the at least one passage additionally comprises an object inlet (104);
the objects are inserted into the housing chamber (100) inside a ball that rolls through at least one passage between the mechanical shaft (114) to the housing chamber (100) by means of the connecting arm (113) and the articulated connection (108).

9. Hypergravity system (10) according to any one of claims 1 to 8, **characterized in that** it comprises:
an outer containment wall (115) radially surrounding the mechanical shaft (114) and the at least one housing chamber (100);
at least one external collection space (118) contained within the external containment wall (115), wherein the at least one collection space (118) is configured to receive a sphere purged by the housing chamber (100).

10. Hypergravity system (10), according to claim 9, **characterized by** the fact that it comprises at least one access walkway (111) to the mechanical shaft (114) connecting the external containment wall (115) to the mechanical shaft (114).

11. Hypergravity system (10), according to claim 9, **characterized by** the fact that the housing chamber (100) comprises an object outlet (105) configured to receive and allow the passage of the sphere out of the housing chamber (100).

12. Hypergravity system (10), according to any one of claims 8 to 11, **characterized by** the fact that the sphere is formed by two half-spheres, the half-spheres connecting from a connection mechanism between a threaded fitting, a clamp and a metal engagement clasp.

13. Hypergravity system (10) according to any one of claims 1 to 12, **characterized in that** it further comprises a radial peripheral circular structure (119) concentric to the mechanical axis (114), which connects the connecting arms (113) to each other close to their articulated connections (108).

14. Hypergravity system (10) according to any one of claims 1 to 13, **characterized in that** the connecting arms (113) and the radial peripheral circular structure (119) are one of a tubular structure and a lattice structure.

15. Hypergravity system (10) according to any one of claims 1 to 14, **characterized in that** it comprises:
at least one support structure to support the connecting arms (113);
at least one support structure, at least one of which is steel cables (117) and a knee brace (116).

16. Hypergravity system (10), according to any one of claims 1 to 15, **characterized in that** it comprises at least two accommodation chambers (100),
wherein the hypergravity system (10) further comprises:
one or more movable walkways (120) connecting the accommodation chambers (100), the one or more movable walkways (120) comprising a sliding floor, a sliding cover and accordion walls, and
in which the one or more mobile walkways (120) are configured to, with the movement of the mechanical shaft (114), modify their length by moving the rotating housing chambers (100) apart.

17. Hypergravity system (10) according to any one of claims 1 to 16, **characterized in that** the at least one central engine configured to cause rotational movement to the mechanical shaft (114) is at least one of an internal combustion engine and an electric motor.

18. Hypergravity system (10), according to any one of claims 1 to 17, **characterized by** the fact that it comprises a multiple maintenance and supply station (112) arranged above the mechanical axis (114) and connected to at least one passage, where all the entry and exit points to the housing chambers (100) are concentrated.

19. Hypergravity system (10) according to any one of claims 1 to 18, **characterized in that** each of the accommodation chambers (100) is constructed as a detachable module, which allows the removal of side walls.
